(19) Europäisches Patentamt
European Patent Office
Office européen des brevets

(11) EP 0 550 783 B1

(12) FASCICULE DE BREVET EUROPEEN

(45) Date de publication et mention de la délivrance du brevet:
13.11.1996 Bulletin 1996/46

(51) Int. Cl.⁶: **A23K 1/16**, A23K 1/18

(21) Numéro de dépôt: 92100261.4

(22) Date de dépôt: 09.01.1992

(54) **Utilisation de diol diesters dans des aliments pour chiens et chats**

Verwendung von Dioldiestern in Hunde- und Katzenfutter

Use of diol diesters in dog and cat food

(84) Etats contractants désignés:
AT BE CH DE DK ES FR GB IT LI NL SE

(43) Date de publication de la demande:
14.07.1993 Bulletin 1993/28

(73) Titulaire: SOCIETE DES PRODUITS NESTLE S.A.
CH-1800 Vevey (CH)

(72) Inventeurs:
• Traitler, Helmut
CH-51802 Corseaux (CH)

• Winter, Heike
CH-1800 Vevey (CH)

(56) Documents cités:
EP-A- 0 405 874          GB-A- 1 409 024

• AGRICULTURAL AND BIOLOGICAL CHEMISTRY. vol. 36, no. 13, 1972, TOKYO JP pages 2473 - 2478; MINORU YOSHIDA ET AL.: 'Evaluation of nutritive value of glycol esters as energy source for growing chicks and rats'

**Description**

La présente invention concerne l'utilisation de diester de 2,3-butanediol et d'acide gras, notamment en C16-C22 à titre de modérateur calorique dans des aliments pour chiens et chats contenant des corps gras.

Des composés structurellement semblables aux diol diesters utilisés selon l'invention sont décrits d'une manière générale dans EP-A-0161114 comme régulateurs de croissance des plantes. Les esters de 2-méthyl-1,4-butanediol et de 1,3-propanediol avec les acides oléique, linoléique et linolénique sont mentionnés en particulier.

Les diol diesters utilisés selon l'invention, leur procédé de préparation ainsi que leur activité de modérateur calorique chez les rats obèse sont décrits dans la demande de brevet EP-A-0465689 compris dans l'état de la technique au sens de l'article 54(3) (BE. Les diol diesters peuvent être utilisés en remplacement partiel ou total, par exemple à raison de 10 à 100% des corps gras entrant habituellement dans la composition des aliments pour chiens et chats, se présentant sous forme sèche ou sous forme humide, dans ce dernier cas en boîte ou en barquette stérilisées.

Dans ces aliments, les diol diesters représentent de préférence 3 à 20% en poids de l'aliment.

Selon les caractéristiques souhaitées en liaison avec l'application envisagée, on peut choisir la nature et la répartition des acides gras des diesters en fonction des paramètres technologiques et physico-chimiques des aliments.

Ainsi, on préfère une prédominance des acides palmitique, stéarique, oléique et linoléique.

Les exemples ci-après illustrent l'invention. Dans ceux-ci, les pourcentages sont en poids sauf indication contraire.

Exemple 1

On prépare un aliment sec pour chiens à partir d'une base sous forme sèche constituée par extrusion-cuisson des ingrédients dans les proportions ci-après:

| Ingrédient | % |
|---|---|
| Riz | 44,04 |
| Farine de déchets de volaille | 30 |
| Farine de gluten de maïs | 11,1 |
| Farine de soja | 10,1 |
| Suif de boeuf | 3 |
| Chlorure de potassium | 0,8 |
| Sel, iodé | 0,5 |
| Prémélange de vitamines | 0,05 |
| Prémélange de minéraux | 0,01 |
| | $\overline{100}$ |

On enrobe le mélange précédent avec les ingrédients ci-après, dans les proportions indiquées.

| | % |
|---|---|
| Mélange sec de base | 90 |
| Prémélange d'enrobage dont 2,3-butanediol diester semi-solide à solide de composition moyenne en acides gras de C16:0, 25%; C18:0, 10%; C18:1, 55% et C18:2, 10% et d'indice d'iode 70 | 5 |
| Suif de boeuf modifié | 5 |
| | $\overline{100}$ |

## Exemple 2

De la même manière que dans l'exemple 1, on prépare un aliment sec pour chats à partir d'une base sèche de composition indiquée ci-après:

| Ingrédient | % |
|---|---|
| Maïs | 59,09 |
| Farine de déchets de volaille | 23 |
| Farine de gluten de maïs | 12 |
| Farine de soja | 5 |
| Phosphate dicalcique | 1 |
| Sel, iodé | 1 |
| Chlorure de choline | 0,3 |
| Prémélange de vitamines | 0,2 |
| Chlorure de potassium | 0,2 |
| Prémélange de minéraux | 0,1 |
| Taurine | 0,1 |
| Sulfate ferreux | 0,01 |
| | $\overline{100}$ |

On enrobe la base sèche précédente avec un mélange d'enrobage dans les proportions ci-après.

| | % |
|---|---|
| Mélange de base | 85 |
| 2,3-butanediol diester utilisé dans l'exemple 1 | 5 |
| Suif de boeuf modifié | 10 |
| | $\overline{100}$ |

## Exemple 3

On prépare un aliment humide pour chiens sous forme d'une dispersion que l'on introduit dans des boîtes que l'on sertit, puis que l'on stérilise en autoclave. La dispersion a la composition ci-après.

| Ingrédient | % |
|---|---|
| 2,3-butanediol diester utilisé dans l'exemple 1 | 5 |
| Cous et arrières de poulet | 38,95 |
| Poumon de boeuf | 22,53 |
| Viande de boeuf désossée mécaniquement | 4,54 |
| Gomme de guar | 0,35 |
| Kappa carrhagénanne | 0,10 |
| Prémélange de minéraux | 0,31 |
| Prémélange de vitamines | 0,06 |
| Sel, non-iodé | 0,1 |
| Sel d'oignons | 0,06 |
| Eau | 28 |
| | $\overline{100}$ |

Exemple 4

On procède comme à l'exemple 3 pour préparer un aliment humide en boîte pour chats à partir des ingrédients ci-après.

| Ingrédient | % |
|---|---|
| 2,3-butanediol diester utilisé selon l'exemple 1 | 5 |
| Foie de boeuf | 5 |
| Foie de porc | 3 |
| Poumon de boeuf | 7 |
| Poumon de porc | 6 |
| Rognon de porc | 5 |
| Poisson | 13 |
| Poumon de mouton | 6 |
| Isolat de soja | 2 |
| Agent gélifiant | 0,55 |
| Gomme de guar | 0,2 |
| Nitrite | 0,4 |
| Dioxyde de titane | 0,2 |
| Bicarbonate de calcium | 0,3 |
| Prémélange de vitamines | 0,1 |
| Prémélange de minéraux | 0,2 |
| Eau | 46,05 |
| | $\overline{100}$ |

## Revendications

1. Utilisation d'un diester de 2,3-butanediol et d'acide gras, notamment en C16-C22 à titre de modérateur calorique dans des aliments pour chiens et chats contenant des corps gras.

2. Utilisation selon la revendication 1, caractérisée par le fait que le modérateur calorique représente 3 à 20% en poids de l'aliment.

3. Utilisation selon la revendication 1, caractérisée par le fait que le modérateur calorique est mis en oeuvre en remplacement de 10 à 100% des corps gras de l'aliment.

4. Utilisation selon la revendication 1, caractérisée par le fait que l'on met en oeuvre un 2,3-butanediol diester des acides palmitique, stéarique, oléique et linoléique.

## Claims

1. Use of a diester of 2,3-butanediol and a fatty acid, more particularly a $C_{16}$-$C_{22}$ fatty acid as a calorie moderator in dog and cat foods containing fats.

2. Use according to claim 1, characterized in that the calorie moderator represents 3 to 20 % by weight of the food.

3. Use according to claim 1, characterized in that the calorie moderator is used as a replacement for 10 to 100 % of the fats in the food.

4. Use according to claim 1, characterized in that a 2,3-butanediol diester of palmitic, stearic, oleic and linoleic acids is used.

**Patentansprüche**

1. Verwendung eines Diesters aus 2,3-Butandiol und Fettsäure, insbesondere $C_{16}$-$C_{22}$, als Brennwerterniedriger von fetthaltiger Hunde- und Katzennahrung.

2. Verwendung nach Anspruch 1, dadurch gekennzeichnet, daß der Brennwerterniedriger von 3 bis 20 Gew.-% der Nahrung bildet.

3. Verwendung nach Anspruch 1, dadurch gekennzeichnet, daß der Brennwerterniedriger als Ersatz für von 10 bis 100% des Fetts in der Nahrung eingesetzt wird.

4. Verwendung nach Anspruch 1, dadurch gekennzeichnet, daß man einen Diester von 2,3-Butandiol mit Palmitinsäure, Stearinsäuree, Ölsäure und Linolsäure einsetzt.